# DEMANDE DE BREVET EUROPEEN

(11) **EP 1 726 857 A1**
(43) Date de publication de la demande: **29.11.2006**
(21) Numéro de dépôt: 06370017.3
(22) Date de dépôt: 22.05.2006
(51) Int. Cl.: F16K 27/07

(54) **Dispositif à double commande pour un clapet**

(30) Priorité: 27.05.2005 FR 0505378
(71) Demandeur: ARBEL FAUVET RAIL S.A., F-59500 Douai (FR)
(72) Inventeur: Dufour, Francis, 59265 Aubigny au Bac (FR); Blondel, Mickael, 59860 Bruay sur l'Escaut (FR)
(74) Mandataire: Hennion, Jean-Claude

(57) **Abrégé**

L'invention se rapporte à un dispositif à double commande pour l'ouverture fermeture d'un clapet notamment de vidange de cuve.

Il est caractérisé en ce qu'il comprend :
- un ensemble articulé (2) dont l'actionnement provoque l'ouverture ou la fermeture du clapet,
- des moyens de commande mécanique (4) de l'ensemble articulé (2),
- des moyens de commande pneumatique (5) de l'ensemble articulé (2),
- des moyens de débrayage (6) permettant en exécutant une des commandes, mécanique ou pneumatique, d'actionner l'ensemble articulé (2) sans répercussion sur l'autre commande.

## Description

L'invention concerne un dispositif à double commande pour l'ouverture/fermeture d'un clapet notamment de vidange de cuve et un wagon comprenant au moins deux bogies, un châssis et une cuve équipée d'un dispositif à double commande tel que précité.

L'invention trouvera son application principale dans la réalisation d'un dispositif à double commande pour ouverture/fermeture d'un clapet de vidange de cuve.

Ce clapet pourra être notamment disposé à l'intérieur de la cuve, l'ouverture du clapet s'effectuant soit par l'intermédiaire d'un câble et d'un système de mise à l'atmosphère soit par un ensemble de tringlerie, le câble ou l'ensemble de tringlerie étant directement relié au dit dispositif à double commande.

Bien que particulièrement prévu pour de telles applications, le dispositif pourra également être utilisé dans d'autres applications et notamment dans des applications dans lesquelles l'ouverture du clapet doit être réalisée à distance.

Dans le domaine du ferroviaire, la plupart des wagons avec réservoir sont achetés par des sociétés de location qui les placent chez des exploitants pour des durées plus ou moins longues.

En fonction de la matière transportée et également des installations des exploitants, les sociétés de location placent soit des wagons avec une cuve équipée d'un dispositif de commande d'ouverture/fermeture du clapet mécanique soit avec un dispositif de commande pneumatique.

Un des grands avantages du système pneumatique est que la commande pneumatique peut être réalisée à distance une fois que l'entrée d'air du système est raccordée à une alimentation en air prévue sur l'installation.

Toutefois, toutes les installations fixes ne sont pas toujours équipées pour pouvoir réaliser cette commande pneumatique.

Le système à commande mécanique qui est également connu de l'homme du métier ne nécessite pas d'installation fixe particulière. Toutefois, la réalisation de la commande ne peut être faite que manuellement par un opérateur placé juste à côté de la cuve.

De ce fait, les systèmes à commande mécanique ne présentent pas une sécurité optimum lorsque la cuve est destinée à contenir des matières dangereuses et notamment inflammables ou explosives qui peuvent provoquer un incendie suite à un accident.

On voit donc que les systèmes à commande pneumatique ou mécanique répondent à des utilisations différentes. Ceci pose d'importants problèmes de logistique à la société de location puisqu'elle doit disposer de deux parcs séparés : un avec des réservoirs ou cuves équipés de dispositif à commande mécanique et un second avec des commandes pneumatiques.

Il est à noter également qu'il est possible lorsque l'exploitant rend le wagon de modifier le système en changeant la commande pneumatique en mécanique ou inversement, toutefois cette solution n'est envisageable qu'en dernier recours pour la société de location puisqu'elle engendre des frais importants de maintenance, une immobilisation du wagon et nécessite également une nouvelle homologation du wagon.

La présente invention a pour but de proposer un nouveau dispositif de commande permettant de pallier aux inconvénients précités.

A cette fin, l'objet de la présente invention est un dispositif à double commande pour ouverture/fermeture d'un clapet, notamment de vidange de cuve, ce dispositif étant à commande mécanique ou pneumatique.

Un autre objet de la présente invention est de proposer un dispositif dans lequel l'opérateur choisit soit une commande pneumatique notamment si les installations fixes le permettent soit une commande mécanique avec des moyens de sécurisation empêchant l'exécution des deux commandes simultanément.

Un autre but de la présente invention est de proposer un dispositif dans lequel une partie des pièces de la transmission du mouvement au clapet est commune aux deux commandes mécanique et pneumatique.

Un autre but de la présente invention est de proposer un dispositif double commande pouvant s'adapter à une cuve dont le clapet intérieur est relié soit à des dispositifs de tringlerie soit à un système de câblage et de mise à l'atmosphère.

L'invention a ainsi pour objet un dispositif de commande pour ouverture /fermeture d'un clapet notamment de vidange de cuve caractérisé en ce qu'il comprend :
- un ensemble articulé dont l'actionnement provoque l'ouverture ou la fermeture du clapet,
- des moyens de commande mécanique de l'ensemble articulé,
- des moyens de commande pneumatique de l'ensemble articulé,
- des moyens de débrayage permettant en exécutant une des commandes, mécanique ou pneumatique, d'actionner l'ensemble articulé sans répercussion sur l'autre commande.

L'invention vise également un wagon comprenant un bogie et une cuve équipée d'un dispositif à double commande tel que précité.

D'autres caractéristiques et avantages de l'invention apparaîtront plus clairement à la lecture de la description ci-après d'un exemple préféré de réalisation, dans lequel la description n'est donnée qu'à titre d'exemple non limitatif et en référence aux dessins annexés parmi lesquels :
- la figure 1 représente de manière schématique un exemple de réalisation du dispositif à double commande conforme à l'invention, le dispositif étant en position fermée,
- la figure 2 reprend l'exemple de réalisation de la figure 1 avec le dispositif placé en position ouverte mécaniquement,
- la figure 3 reprend l'exemple des figures 1 et 2 avec cette fois le dispositif placé en position ouverte pneumatiquement,
- la figure 4 représente une vue en perspective d'un dispositif à double commande fixé sur un châssis de wagon représenté partiellement,
- la figure 5 représente un exemple schématique de représentation d'un wagon comportant un bogie et une cuve équipés d'un dispositif à double commande conforme à l'invention.

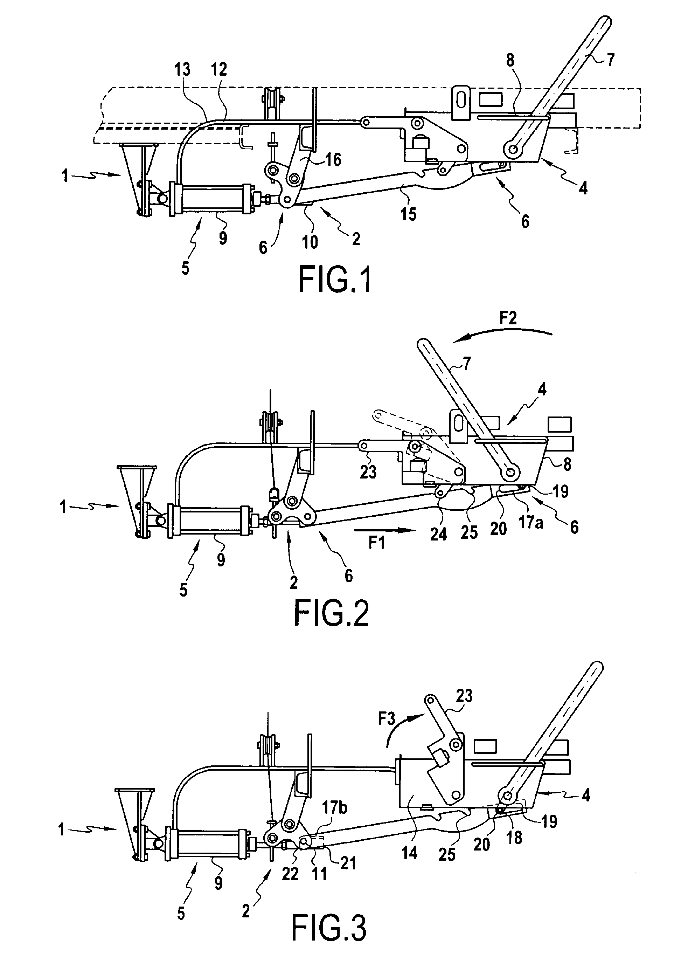

En se reportant à la figure 1, on voit un dispositif à double commande 1 comportant un ensemble articulé 2 dont l'actionnement provoque l'ouverture ou la fermeture d'un clapet 3.

Le dispositif à double commande 1 comporte des moyens de commande mécanique 4 et des moyens de commande pneumatique 5 de l'ensemble articulé 2.

Le dispositif à double commande 1 comporte en outre des moyens de débrayage 6 permettant en exécutant une des commandes, mécanique ou pneumatique, d'actionner l'ensemble articulé 2 sans répercussion sur l'autre commande.

Il est en effet particulièrement important pour des raisons de sécurité que l'actionnement des moyens de commande pneumatique 5 n'entraîne pas celui des moyens de commande mécanique 4.

En effet, un éventuel déplacement de ces moyens 4 peut blesser un opérateur placé à proximité.

Dans l'exemple de réalisation des figures 1 à 5, les moyens de commande mécanique 4 comprennent un levier 7 et une plaque support 8. Ce levier 7 est d'une part monté, libre en rotation, sur la plaque support 8 et d'autre part solidaire par l'intermédiaire d'une seconde pièce de liaison 18 de l'ensemble articulé 2.

On comprend bien sur cet exemple qu'une répercussion d'une commande pneumatique sur les moyens de commande mécanique 4 et donc sur le levier 7 serait dangereuse et il est donc tout à fait important de disposer de moyens de débrayage 6.

Inversement, une action d'une commande mécanique 4 sur l'ensemble articulé 2 ne produit pas non plus d'effets sur les moyens de commande pneumatique 5. Ceci est également particulièrement important puisque l'opérateur qui actionne le levier 7 n'a pas à vaincre la force de résistance supplémentaire qu'exercerait les moyens de commande pneumatique 5 si des moyens de débrayage n'étaient pas prévus.

En pratique, la force à produire sur le levier 7 par l'opérateur étant très importante, il serait impossible d'actionner le levier 7 s'il n'y avait pas de moyens de débrayage 6.

Selon un mode préféré de réalisation, les moyens pneumatiques 5 comprennent un vérin 9 dont la tige 10 est solidaire de l'ensemble articulé 2 par l'intermédiaire d'une première pièce de liaison 11.

Les moyens pneumatiques 5 comportent également une alimentation d'air 12. Cette alimentation en air comprend un flexible 13 et une entrée d'air 14 pouvant être raccordés à un dispositif de compression d'air ou similaire de l'installation fixe.

Le dispositif double commande 1 comporte comme indiqué précédemment un ensemble articulé 2. Cet ensemble articulé 2 ayant pour fonction de transmettre un mouvement directement ou indirectement sur le clapet pour provoquer son ouverture ou sa fermeture.

Cet ensemble articulé 2 comprendra de manière avantageuse une bielle de renvoi 15 et un levier d'articulation 16.

Bien entendu, d'autres pièces permettant la transmission de l'effort auraient également pu être envisagées pour réaliser cet ensemble articulé 2.

En se reportant indifféremment aux figures 1 à 3, on voit que les moyens de débrayage 6 comportent deux rainures 17a, 17b.

Ces rainures 17a, 17b sont pratiquées aux extrémités de la bielle de renvoi 15 et permettent une liaison coulissante avec la première pièce de liaison 11 et la seconde pièce de liaison 18.

Ces rainures 17a, 17b font que l'entraînement de la bielle de renvoi 15 par l'un des moyens de commande 4, 5 n'est réalisé que lorsque l'une des pièces de liaison 18, 11 est en butée respectivement contre le fond 19 de la rainure 17a et le fond 21 de la rainure 17b.

De préférence, les rainures 17a, 17b ont des longueurs identiques, leur longueur correspondant également à la course de la bielle de renvoi 15 entre une position ouverte et une position fermée du clapet 3.

Dans la figure 1, la bielle de renvoi 15 est placée dans une position correspondant à la position fermée du clapet 3. Un déplacement dans le sens de la flèche 1 de la bielle de renvoi 15 provoque l'ouverture du clapet 3. Ce déplacement peut être provoqué de deux manières, à savoir mécanique ou pneumatique.

Dans la figure 2, est représenté le déplacement de la bielle de renvoi 15 dans le sens F1 par des moyens mécaniques. L'opérateur agit sur le levier 7 dans le sens de la flèche 2. La pièce de liaison 18 étant en butée contre le fond 19 de la rainure 17a, l'entraînement de la bielle 15 est réalisé et le clapet 3 s'ouvre.

Au niveau des moyens de commande pneumatiques 5, la pièce de liaison 11 reste immobile, seule la bielle de renvoi 15 est en mouvement, faisant passer la pièce de liaison 11 d'une position 21 en fond de rainure 17b à une position 22. De la sorte, une action sur les moyens de commande mécanique 4 ne se répercute pas à la commande pneumatique 5.

Il est à noter que selon une caractéristique avantageuse de l'invention, on prévoit un levier auxiliaire 23. Ce levier auxiliaire 23 permet le verrouillage de la bielle de renvoi 15 dans deux positions correspondant aux positions d'ouverture et de fermeture du clapet 3.

A cette fin, le levier 23 comprend une dent 24 venant s'enclencher dans une des deux encoches 25 ménagées dans la bielle de renvoi 15.

Ce levier auxiliaire 23 sert uniquement à bloquer la position de la bielle 15 lorsque le dispositif utilise la commande mécanique.

Pour pouvoir effectuer la commande pneumatique, il faut impérativement déverrouiller le levier auxiliaire 23 en agissant sur lui selon le sens indiqué de la flèche F3.

Selon les caractéristiques avantageuses de l'invention, l'entrée d'air 14 des moyens pneumatiques 5 est masquée lorsque le levier auxiliaire 23 est dans une de ses positions de blocage.

De la sorte, il est impossible de faire fonctionner les moyens de commande pneumatique 5 sans avoir au préalable relevé ce levier auxiliaire 23. Cette disposition permet donc d'éviter une action des moyens pneumatiques 5 lorsque la bielle 15 est verrouillée, ce qui entraînerait un disfonctionnement ou une casse du dispositif 1.

En se reportant à la figure 3, on voit l'ouverture du clapet 3 par les moyens de commande pneumatiques 5.

La tige 10 du vérin 9 pousse par l'intermédiaire de l'élément de liaison 11 sur le fond 21 de la rainure, ce qui a pour effet de déplacer la bielle de renvoi 15 dans le sens de la flèche F1 et donc d'ouvrir le clapet 3.

Ce déplacement de la bielle 15 ne se répercute pas sur le levier 7 puisque la seconde pièce de liaison 18 reste immobile et que c'est la rainure 19 qui coulisse le long de cette pièce de liaison 18 passant d'une position en contact avec la butée 19 à une position 20.

Le mouvement de retour, c'est-à-dire de fermeture du clapet 3, s'effectue pour la commande mécanique en relevant le levier auxiliaire 23, ce qui a pour effet compte tenu des forces exercées sur la bielle de renvoi 15 de déplacer cette bielle dans le sens inverse à la flèche 1 puis de rebaisser le levier auxiliaire 23 de sorte que la dent 24 et le levier 23 viennent se verrouiller dans la seconde encoche 25 correspondant à la position fermée et représentée à la figure 1.

Pour réaliser la fermeture du clapet 3 en mode de fonctionnement pneumatique, il suffit de couper l'arrivée d'air pour que la bielle de renvoi 15 revienne à la position illustrée à la figure 1.

Le dispositif à double commande 1 permet donc une commande aisée et fiable, pneumatique ou mécanique, du clapet et en toute sécurité puisque les commandes mécaniques n'influent pas sur les commandes pneumatiques et réciproquement.

Il est également important de noter que différentes caractéristiques intéressantes pourront être apportées de manière séparée ou combinée au dispositif. On pourra notamment prévoir au niveau du levier auxiliaire 23 des moyens de plombage du dispositif.

On pourra également prévoir des moyens de signalisation de l'état de la commande pneumatique de sorte que l'opérateur sache, lorsque le raccordement à l'entrée d'air est effectué, si le dispositif 1 est sous pression ou non.

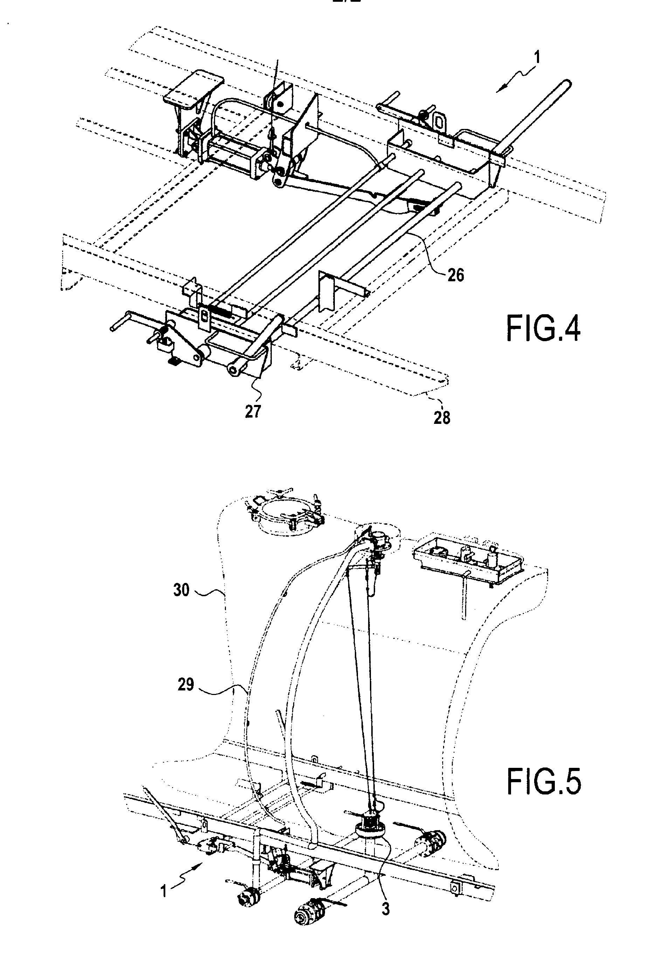

En se reportant à la figure 4, on voit également que le dispositif double commande 1 pourra également être relié à un dispositif à commande mécanique 27 simple par l'intermédiaire de barres de transmission 26, ce dispositif à commande mécanique 27 étant assujetti au côté opposé du châssis de wagon 28.

En se reportant à la figure 5, on voit que le levier d'articulation 16 est relié à un câble 29 d'un système de mise à l'atmosphère. Cette liaison peut être directe ou indirecte, le levier d'articulation 16 pouvant être également relié à un tenseur permettant le réglage de la tension du câble 29.

Le dispositif d'ouverture/fermeture 1 pourra par l'intermédiaire du levier d'articulation 16 être relié à d'autres moyens d'ouverture/fermeture et notamment se situant dans la partie inférieure de la cuve 30. Ces dispositifs sont largement connus de l'homme du métier.

Bien entendu, d'autres modes de réalisation que ceux décrits ci avant auraient pu être envisagés sans pour autant sortir du cadre de l'invention défini par les revendications suivantes.

## Revendications

1. Dispositif à double commande pour l'ouverture fermeture d'un clapet (3) notamment de vidange de cuve, **caractérisé en ce qu'**il comprend :
- un ensemble articulé (2) dont l'actionnement provoque l'ouverture ou la fermeture du clapet (3),
- des moyens de commande mécanique (4) de l'ensemble articulé (2),
- des moyens de commande pneumatique (5) de l'ensemble articulé (2),
- des moyens de débrayage (6) permettant en exécutant une des commandes, mécanique ou pneumatique, d'actionner l'ensemble articulé (2) sans répercussion sur l'autre commande.

2. Dispositif à double commande selon la revendication 1, dans lequel l'ensemble articulé (2) comprend une bielle de renvoi (15) et un levier d'articulation (16).

3. Dispositif à double commande selon l'une ou l'autre des revendications 1 et 2, dans lequel les moyens de commande pneumatiques (5) comprennent un vérin (9) dont la tige (10) est solidaire de l'ensemble articulé (2) par l'intermédiaire d'une pièce de liaison (11) et une alimentation en air (14).

4. Dispositif à double commande selon l'une quelconque des revendications 1 à 3, dans lequel les moyens de commande mécanique (4) comprennent un levier (7) d'une part monté, libre en rotation, sur une plaque support (8) et d'autre part solidaire par l'intermédiaire d'une seconde pièce de liaison (18) de l'ensemble articulé (2).

5. Dispositif à double commande selon l'une quelconque des revendications 2 à 4, dans lequel les moyens de débrayage (6) comportent deux rainures (17a, 17b) pratiquées aux extrémités de la bielle de renvoi (15) permettant une liaison coulissante avec les premières et secondes pièces de liaison (11, 18), l'entraînement de la bielle (15) par l'un des moyens de commande étant réalisé lorsque l'une des pièces de liaison (11, 18) est en butée contre les fonds respectivement (21 et 19) des rainures (17a, 17b).

6. Dispositif à double commande selon l'une quelconque des revendications 2 à 5, dans lequel on prévoit un levier auxiliaire (23) permettant le verrouillage la bielle de renvoi (15) dans deux positions correspondant à l'ouverture et à la fermeture du clapet (3).

7. Dispositif à double commande selon la revendication 6, dans lequel l'entrée d'air des moyens de commande pneumatique (5) est masquée lorsque le levier auxiliaire (23) est dans une de ses positions de blocage.

8. Dispositif à double commande selon l'une quelconque des revendications 2 à 7 précédentes, dans lequel le levier d'articulation (16) est relié à un câble de système de mise à l'atmosphère par l'intermédiaire d'un tenseur.

9. Dispositif à double commande selon l'une ou l'autre des revendications 7 et 8 dans lequel on prévoit des moyens de plombage au niveau du levier auxiliaire (23).

10. Dispositif à double commande selon l'une quelconque des revendications 1 à 9 précédentes, dans lequel on prévoit des moyens de signalisation de l'état de la commande pneumatique.

11. Wagon, comprenant au moins deux bogies, un châssis et une cuve équipée d'un dispositif à double commande selon l'une quelconque des revendications 1 à 10.

12. Wagon selon la revendication 11, dans lequel le dispositif à double commande, assujetti à un côté du châssis, est relié à un dispositif à commande mécanique assujetti au côté opposé.
